# EUROPÄISCHE PATENTSCHRIFT

(11) **EP 3 550 083 B1**
(45) Veröffentlichungstag und Bekanntmachung des Hinweises auf die Patenterteilung: **09.08.2023**
(21) Anmeldenummer: 18165654.7
(22) Anmeldetag: 04.04.2018
(51) Int. Cl.: E02F 9/20, E02F 9/22, B60K 6/40, B60K 6/48, B60L 1/00, B60L 50/53

(54) **BAUMASCHINE**
CONSTRUCTION MACHINE
ENGIN DE CHANTIER

(43) Veröffentlichungstag der Anmeldung: 09.10.2019
(73) Patentinhaber: BAUER Maschinen GmbH, 86529 Schrobenhausen (DE)
(72) Erfinder: OSTERLAND, Matthias, 86529 Schrobenhausen (DE)
(74) Vertreter: Wunderlich & Heim Patentanwälte Partnerschaftsgesellschaft mbB

(56) Entgegenhaltungen:
- DE-A1- 2 402 834
- DE-A1-102010 004 596
- DE-U1-202011 107 327
- JP-A- 2005 076 781
- JP-A- 2006 027 345
- JP-A- 2006 335 221

## Beschreibung

Die Erfindung betrifft eine Baumaschine mit einem als Fahrwerk ausgebildeten Unterwagen, einem auf dem Unterwagen angeordneten Oberwagen, einer Hauptantriebseinheit mit einem Hauptantrieb, einem vom Hauptantrieb angetriebenen Verteilergetriebe und mindestens einem Energiewandler, der eine mechanische Energie des Verteilergetriebes in eine andere Energieform umwandelt, wobei der Hauptantrieb, das Verteilergetriebe und der Energiewandler von einem Gehäuse des Oberwagens umgeben und eingehaust sind, und mindestens einer Verbrauchseinrichtung, welche außerhalb des Gehäuses angeordnet ist und mit der gewandelten Energie von zumindest einem der Energiewandler versorgt wird, gemäß dem Oberbegriff des Anspruchs 1.

Derartige Baumaschinen sind hinlänglich etwa als Erdbohrgeräte, Schlitzwandfräsen, Rüttler, Rammen etc. bekannt. Dabei befindet sich an einem Oberwagen die Antriebseinheit, welche üblicherweise einen Dieselmotor umfasst. Der Dieselmotor treibt dabei ein zentrales Verteilergetriebe an. Mit dem Verteilergetriebe stehen verschiedene Energiewandler in Verbindung und werden von dem Verteilergetriebe angetrieben. Ein solcher Energiewandler kann etwa ein Stromgenerator sein, durch den die drehende Bewegung, welche vom Verteilergetriebe abgegriffen wird, in einen elektrischen Strom umgewandelt wird. Weiterhin kann als Energiewandler typischerweise auch eine Hydraulikpumpe vorgesehen sein. Durch die Hydraulikpumpe kann ein geschlossener oder offener Hydraulikreislauf mit hydraulischer Energie versorgt werden. Hierbei kann eine Verbrauchseinrichtung, etwa ein Hydraulikmotor, beispielsweise ein Bohrantrieb bei einem Bohrgerät, oder ein Hydraulikzylinder mit Energie versorgt werden, indem Hydraulikflüssigkeit mit einem bestimmten Druck und bestimmter Menge von der Hydraulikpumpe zu der Verbrauchseinrichtung gepumpt wird.

In entsprechender Weise können auch durch den Stromgenerator entsprechende Elektromotoren oder sonstige elektrische Stellverbraucher versorgt werden.

Durch die Energiewandlung kann die von der Antriebseinheit, typischerweise einem Dieselmotor, erzeugte mechanische Drehenergie in eine Energieform gewandelt werden, welche etwa als elektrischer Strom oder hydraulische Energie effizient an beabstandete dezentrale Verbrauchseinrichtungen übertragen werden kann. Allerdings wird der Einsatz eines Dieselantriebs als Antriebseinheit für eine Baumaschine aufgrund immer schärferer Vorgaben hinsichtlich Abgas- und Lärmemissionen und sonstiger Umweltschutzvorgaben immer kritischer gesehen und kann für bestimmte Bereiche eingeschränkt oder sogar untersagt sein. Jedoch ist eine zuverlässige und unabhängige Energieversorgung einer mobilen Baumaschine im Einsatz auf einer Baustelle von wesentlicher Bedeutung. Eine Energieversorgung alternativer Antriebe bei Baumaschinen ist aufgrund des erheblichen Energiebedarfs einer mobilen Baumaschine problematisch.

Aus der gattungsbildenden JP-A-2006-33522 geht eine Baumaschine mit einer hybriden Antriebsanordnung hervor, welche einen Verbrennungsmotor und einen Generator/Elektromotor GM aufweist. Zur Energieversorgung des Elektromotors ist eine Batterie vorgesehen. Geladen wird die Batterie ausschließlich durch die Generatoren, welche Drehenergie des Verbrennungsmotors oder überschüssige Hydraulikenergie der Baumaschine als elektrische Energie wiedergewinnen.

Die DE-A-2 402 834 betrifft einen Hydraulikbagger mit einer hybriden Antriebsordnung, welche einen Elektromotor und einen Dieselmotor aufweist. Der Dieselmotor treibt ein Pumpenaggregat an.

Bei dieser Baumaschine nach JP-A-2005-76781 ist eine hybride Antriebsordnung mit einem Verbrennungsmotor und einem Elektromotor/Generator vorgesehen.

Die JP-A-2006-27345 betrifft eine Baumaschine, bei welcher zusätzlich ein Hilfsaggregat angeordnet werden kann, durch welches Hydraulikflüssigkeit direkt in das Hydrauliksystem eingeleitet werden kann.

Aus der WO 2012/175943 geht ein hydraulisches System für eine Baumaschine mit einem Hilfsantrieb hervor. Bei diesem System ist als Hauptantrieb eine Verbrennungsmaschine vorgesehen, die im Bedarfsfall durch eine hydraulische Maschine unterstützt werden kann.

Der Erfindung liegt die **Aufgabe** zugrunde, eine Baumaschine anzugeben, welche sowohl einen besonders umweltschonenden Antrieb als auch eine große Unabhängigkeit bei der Energieversorgung ermöglicht.

Die Aufgabe wird nach der Erfindung durch eine Baumaschine mit den Merkmalen des Anspruchs 1 gelöst. Bevorzugte Ausführungsformen der Erfindung sind in den abhängigen Ansprüchen angegeben.

Die erfindungsgemäße Baumaschine ist dadurch gekennzeichnet, dass der Hauptantrieb ein Hauptelektromotor ist und dass außerhalb des Gehäuses mindestens eine Hilfsantriebseinheit angeordnet ist, durch welchen zum Ersatz oder zum Unterstützen des Hauptelektromotors zusätzlich das Verteilergetriebe antreibbar ist.

Eine Grundidee der Erfindung liegt darin, bei der Hauptantriebseinheit, welche in einem Gehäuse des Oberwagens eingehaust ist, keinen Dieselmotor oder Verbrennungsmotor vorzusehen. Vielmehr wird gemäß der Erfindung als Hauptantrieb ein Elektromotor vorgesehen. Für diesen Hauptelektromotor können an der Baumaschine, insbesondere am Oberwagen, vorzugsweise im Gehäuse, Stromspeicher vorgesehen sein. Allerdings können diese aufgrund des begrenzten Raumes an einer Baumaschine und des relativ hohen Energiebedarfs einer Baumaschine allenfalls nur für eine relativ kurze Betriebszeit der Baumaschine ausreichend sein. Vorzugsweise ist als eine Hauptenergieversorgung ein Stromleitungsanschluss vorgesehen, so dass der als Hauptantrieb angesehene Elektromotor von einer externen Stromquelle oder von einem externen Stromnetz mit Stromenergie versorgt werden kann.

Ein weiterer Aspekt der Erfindung besteht darin, dass eine Stromzuführung über eine Stromleitung von einem entfernten Stromnetz bei mobilen Baumaschinen problematisch sein kann. Gemäß der Erfindung wird diesem Problem dadurch Rechnung getragen, dass außerhalb des Gehäuses mindestens eine Hilfsantriebseinheit angeordnet ist, durch welche zum Ersatz oder zum Unterstützen des Hauptelektromotors zusätzlich das Verteilergetriebe antreibbar ist. Die Hilfsantriebseinheit kann einen Hilfsantrieb aufweisen, welcher ein beliebiger Motor sein kann, etwa auch ein Dieselmotor oder ein Verbrennungsmotor. Hierdurch kann auch in besonderen Fällen, bei welchen keine Stromzuführung von einem externen Stromnetz möglich oder eine solche Stromzuführung für eine Baumaschine nicht ausreichend ist, über den Hilfsantrieb ausreichend Energie zum Betreiben des Verteilergetriebes in dem Gehäuse der Baumaschine zur Verfügung gestellt werden. Somit kann die Baumaschine etwa an abgelegenen Stellen einer Baustelle weiter zuverlässig betrieben werden.

Insbesondere wird durch die Hilfsantriebseinheit eine mechanische drehende Energie des Hilfsantriebs in eine andere Energieform umgewandelt, welche leicht übertragbar ist, insbesondere mittels einer Energieleitung, etwa einer Hydraulik-, Pneumatik-, oder Stromleitung. Diese gewandelte andere Energie kann dann in das Gehäuse zum Antrieb des Verteilergetriebes übertragen werden.

Dabei ist es nach einer Weiterbildung der Erfindung bevorzugt, dass die andere Energieform, in welcher die mechanische Energie des Verteilergetriebes durch den mindestens einen Energiewandler umgewandelt wird, hydraulische Energie, pneumatische Energie und/oder elektrischen Strom umfasst. Diese Energieformen sind platz- und gewichtssparend von der zentralen Antriebseinheit an einen oder mehrere dezentrale Verbrauchseinrichtungen an der Baumaschine oder von der Hilfsantriebseinheit zur zentralen Hauptantriebseinheit übertragbar.

Grundsätzlich kann der Hilfsantrieb außerhalb des Gehäuses des Oberwagens ein beliebiger geeigneter Antrieb oder Motor sein. Besonders vorteilhaft ist es nach einer Weiterbildung der Erfindung, dass die mindestens eine Hilfsantriebseinheit einen Hilfsantrieb, insbesondere einen Verbrennungsmotor und/oder einen Hilfselektromotor, umfasst.

Beim Einsatz eines Hilfselektromotors ist es nach einer Ausbildungsvariante der Erfindung besonders vorteilhaft, dass der Hilfselektromotor mit einer geringeren Spannung und/oder einem geringeren Strom als der Hauptelekromotor betreibbar ist. Dies ist insbesondere dann vorteilhaft, wenn an einer Baustelle kein entsprechender Starkstrom oder keine entsprechende Spannung für den Hauptelektromotor zur Verfügung steht. In diesem Fall kann dann ein Hilfselektromotor mit einer zur Verfügung stehenden geringen Spannung und/oder einem geringeren Strom betrieben werden. Die vom Hilfselektromotor erzeugte Energie kann dabei in das Gehäuse der Baumaschine übertragen werden.

Bei der Energieübertragung der Energie des Hilfsantriebs oder Hilfsmotors kann selbst eine geeignete Energiewandlung durchgeführt werden, wobei insbesondere eine mechanische oder drehende Energie der Hilfsantriebseinheit in eine andere Energieform, welche leichter übertragbar ist und insbesondere hydraulische, pneumatische und/oder elektrische Energie umfassen kann, umgewandelt wird. Diese so gewandelte andere Energieform kann dann in relativ einfacher Weise über entsprechende Leitungen, also etwa Hydraulikleitungen, Pneumatikleitungen oder Stromleitungen, in das Gehäuse des Oberwagens zum Antrieb des Verteilergetriebes übertragen werden. In dem Gehäuse kann dann ein entsprechendes Zusatzaggregat vorgesehen sein, welches die andere Energieform wieder in eine mechanische oder drehende Energie umwandelt. Dies kann insbesondere durch einen Hydraulikmotor, einen Druckluftmotor oder einen Elektromotor erfolgen, welche in drehender und antreibender Verbindung mit dem Verteilergetriebe stehen.

Grundsätzlich können beliebige geeignete Energiewandler für die erfindungsgemäße Baumaschine vorgesehen sein. Besonders bevorzugt ist es nach einer Ausführungsform der Erfindung, dass der Energiewandler als Hydraulikpumpe, Luftkompressor oder Stromgenerator ausgebildet ist. Diese Energiewandler können vorzugsweise eine drehende und damit mechanische Energie, wie sie von einem Motor mit einer Abtriebswelle abgegeben werden, in effizienter Weise in Hydraulikenergie, Pneumatikenergie oder Stromenergie umgesetzt werden.

Hinsichtlich der Ausgestaltung der Verbrauchseinrichtungen ist es nach einer weiteren Ausführungsvariante der Erfindung besonders zweckmäßig, dass die Verbrauchseinrichtung als Hydraulikmotor, Hydraulikzylinder, Druckluftmotor, Pneumatikzylinder oder Elektromotor ausgebildet ist. Die Motore können dabei die gewandelte Energieform wieder in eine drehende mechanische Energie umsetzen. Hingegen können Hydraulikzylinder oder Pneumatikzylinder sowie entsprechende elektrische lineare Stellmotore und Stellorgane die Energie in eine Linearbewegung umsetzen. Die genannten emissionsfreien oder -armen Motore können auch für das Zusatzaggregat im Gehäuse vorgesehen werden.

Eine weitere bevorzugte Ausführungsvariante der Erfindung besteht darin, dass das Gehäuse eine Verbindungsplatte mit mehreren Steckverbindern aufweist, an welchen lösbar korrespondierende Stecker von Energieleitungen ansteckbar sind, welche zu der mindestens einen Verbrauchseinrichtung führen. Die Verbindungsplatte mit den mehreren Steckverbindern wird auch als sogenannte Schottplatte bezeichnet und stellt einen zentralen Anschlussbereich dar. Über diese Verbindungsplatte können Energieleitungen mit leicht übertragbaren Energien, wie Hydraulik-, Pneumatik- und Stromenergie, von der Hauptantriebseinheit im Gehäuse nach außen und gemäß der Erfindung auch von außen zu der Hauptantriebseinheit in dem Gehäuse übertragen werden. Die Steckverbinder sind insbesondere als Schnellverbinder ausgebildet, welche insbesondere bei der Fluidübertragung leckagefrei oder zumindest leckagearm ausgebildet sind. Grundsätzlich kann das Gehäuse die Antriebseinheit dicht umschließen, was sowohl Lärmemissionen reduziert als auch den Wartungsaufwand aufgrund von Eintritt von Schmutz und Wasser vermindert.

Insbesondere ist es bei einer Ausführungsform der erfindungsgemäßen Baumaschine bevorzugt, dass die Energie von der Hilfsantriebseinheit über eine Steckverbindung in der Verbindungsplatte übertragbar ist. Eine zentralisierte Führung von Energieleitungen reduziert den Platzbedarf.

Besonders bevorzugt ist es dabei, dass die Hilfsantriebseinheit einen Hilfsenergiewandler, insbesondere eine Hydraulikpumpe oder einen Stromgenerator, außerhalb des Gehäuses des Oberwagens aufweist und dass die vom Hilfsenergiewandler gewandelte Energie zu einem Sekundärantrieb innerhalb des Gehäuses übertragen wird, wobei der Sekundärantrieb das Verteilergetriebe antreibt. Der Sekundärantrieb kann auch als Zusatzaggregat bezeichnet werden, welcher die gewandelte, leicht übertragbare Energie von der Hilfsantriebseinheit mit dem Hilfsenergiewandler wieder in eine mechanische Energie, insbesondere eine drehende Energie rückwandelt.

Dabei ist es besonders bevorzugt, dass der Sekundärantrieb ein Hydraulikmotor beziehungsweise ein Elektromotor ist. Hierdurch kann auf besonders effiziente Weise eine mechanische Energie von einem Hilfsantrieb als Hydraulikenergie oder Stromenergie in das Gehäuse übertragen werden, wobei dann diese Energie wieder über einen entsprechenden Motor in mechanische Energie umgesetzt wird, welche das zentrale Verteilergetriebe der Antriebseinheit in dem Gehäuse alternativ oder unterstützend antreibt. Dies kann insbesondere dann erfolgen, wenn keine oder keine ausreichende Energieversorgung des Hauptelektromotors mehr gegeben ist. Es kann so ein besonders zuverlässiger Betrieb der erfindungsgemäßen Baumaschine erreicht werden.

Eine Weiterbildung der erfindungsgemäßen Baumaschine ist zudem dadurch gekennzeichnet, dass im Gehäuse mindestens eine primäre Hydraulikpumpe angeordnet ist, welche mindestens eine Verbrauchseinrichtung antreibt und als eine durchschwenkbare Hydraulikeinheit ausgebildet ist, welche zu einem Hydraulikmotor umstellbar ist, dass die Hilfsantriebseinheit eine sekundäre Hydraulikpumpe außerhalb des Gehäuses aufweist und dass eine Stelleinrichtung vorgesehen ist, welche die primäre Hydraulikpumpe in dem Gehäuse in einem Hydraulikmotor umstellt, welcher von der sekundären Hydraulikpumpe außerhalb des Gehäuses angetrieben wird und das Verteilergetriebe als Sekundärantrieb antreibt. Die durchschwenkbare Hydraulikeinheit stellt dabei das Zusatzaggregat oder den Sekundärantrieb in dem Gehäuse dar. In einem Normalbetrieb kann die Hydraulikeinheit als primäre Hydraulikpumpe betrieben werden. Diese wird dabei über den Hauptelektromotor und das Verteilergetriebe angetrieben, so dass der hierdurch versorgte Hydraulikkreislauf zum Betreiben einer oder mehrere Verbrauchseinrichtungen betrieben werden kann. Fällt der Hauptelektromotor aus oder benötigt Unterstützung, kann die Hydraulikeinheit in dem Gehäuse durchgeschwenkt oder umgestellt werden, so dass diese nunmehr als ein Hydraulikmotor dient. Derartige Hydraulikeinheiten sind bekannt und werden häufig auch als durchschwenkbare Hydraulikpumpen bezeichnet. In dieser umgestellten Anordnung kann dann durch entsprechende Stellventile ein Leitungsanschluss an einen Hydraulikkreislauf erfolgen, welcher mit der Hilfsantriebseinheit außerhalb des Gehäuses gekoppelt ist. Über eine entsprechende Hilfshydraulikpumpe außerhalb des Gehäuses kann so die sekundäre Hydraulikpumpe innerhalb des Gehäuses mit Energie versorgt und betrieben werden. Die sekundäre Hydraulikpumpe kann dabei das Verteilergetriebe antreiben. Somit kann das Verteilergetriebe weiter betrieben werden, selbst wenn der Hauptelektromotor außer Betrieb gesetzt ist.

Grundsätzlich kann die Hilfsantriebseinheit beabstandet von der Baumaschine angeordnet sein. Eine bevorzugte Ausführungsform der Erfindung besteht darin, dass die Hilfsantriebseinheit außerhalb des Gehäuses an dem Oberwagen lösbar angebracht ist. Die Hilfsantriebseinheit, welche insbesondere einen Verbrennungsmotor umfasst, kann so im Bedarfsfall an den Oberwagen durch leicht lösbare Verbindungen angeschlossen werden. Die Hilfsantriebseinheit weist dabei vorzugsweise den Hilfsantrieb und einen Hilfsenergiewandler auf.

Grundsätzlich kann die erfindungsgemäße Antriebsanordnung an einer beliebigen Baumaschine vorgesehen sein. Besonders bevorzugt ist es, dass die Baumaschine als eine Erdbearbeitungsmaschine ausgebildet ist. Diese müssen häufig an Baustellen und in unwegsamem Gelände eingesetzt werden, bei welchen eine Energieversorgung insbesondere mit Strom erschwert, eingeschränkt oder sogar unmöglich ist.

Besonders vorteilhaft ist es nach einer Ausführungsform der Erfindung, dass die Erdbearbeitungsmaschine als ein Bohrgerät, ein Schlitzwandgerät, ein Rüttler oder eine Ramme ausgebildet ist. Beim Schlitzwandgerät kann es sich insbesondere um einen Schlitzwandgreifer oder um eine Schlitzwandfräse handeln. Derartige Erdbearbeitungsmaschinen haben einen besonders hohen Energiebedarf, so dass diese bei einem Ausfall einer Hauptenergieversorgung für einen Hauptelektromotor ohne die erfindungsgemäße Energieversorgungsanordnung jedenfalls nicht für längere Betriebszeiten einsetzbar wären.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: einen schematischen Schaltplan zu einer ersten Antriebsanordnung bei einer erfindungsgemäßen Baumaschine;
- Fig. 2: einen schematischen Schaltplan einer zweiten Antriebsanordnung einer erfindungsgemäßen Baumaschine; und
- Fig. 3: einen schematischen Schaltplan einer dritten Antriebsanordnung einer weiteren erfindungsgemäßen Baumaschine.

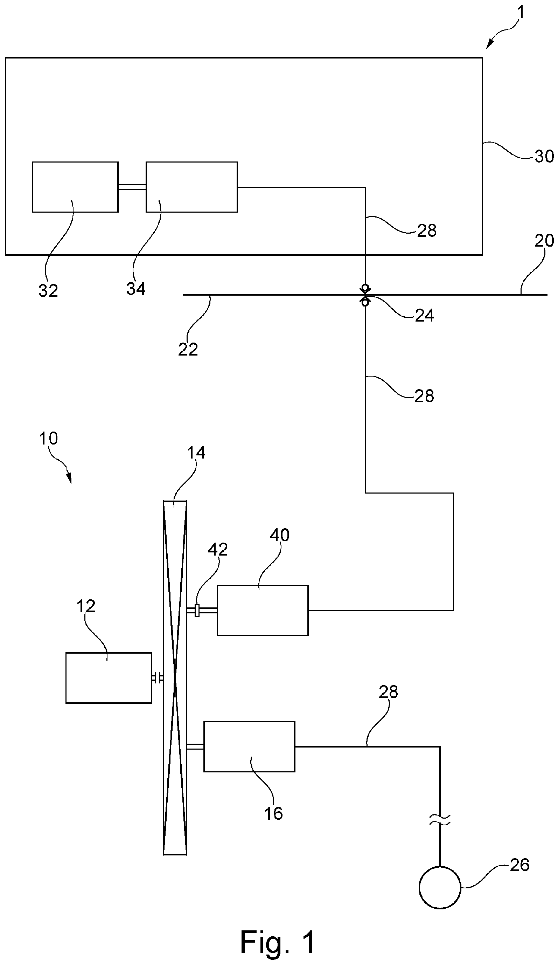

Eine erfindungsgemäße Baumaschine 1 gemäß Fig. 1 besteht grundsätzlich aus einem Unterwagen, welcher vorzugsweise als ein Raupenfahrwerk ausgebildet sein kann, und einem daran vorzugsweise drehbar gelagerten Oberwagen mit einem nur teilweise angedeuteten Gehäuse 20. Innerhalb des Gehäuses 20 ist eine Hauptantriebseinheit 10 angeordnet. Die Hauptantriebseinheit 10 weist einen Hauptantrieb 12 auf, welcher gemäß der Erfindung als ein Hauptelektromotor ausgebildet ist. Der Hauptantrieb 12 treibt über eine mechanische Wellenverbindung, welche vorzugsweise mit einer Kupplung versehen ist, ein nur sehr schematisch angedeutetes zentrales Verteilergetriebe 14 an. Von dem Verteilergetriebe 14 kann das vom Hauptantrieb 12 abgegebene Drehmoment von einem oder mehreren Energiewandlern 16 abgegriffen und in eine leicht übertragbare Energieform umgewandelt werden. Der mindestens eine Energiewandler 16 ist dabei vorzugsweise entweder eine Hydraulikpumpe oder ein Stromgenerator. Der Energiewandler 16 steht dabei vorzugsweise über eine Wellenverbindung, welche insbesondere mit einer lösbaren Kupplung versehen ist, mit dem Verteilergetriebe 14 in Verbindung. Der Energiewandler 16 wandelt dabei die drehende mechanische Energie von dem Verteilergetriebe 14 vorzugsweise in Hydraulikenergie oder Stromenergie um, welche über eine Energieleitung 28, also eine Hydraulikleitung oder eine Stromleitung, zu einer Verbrauchseinrichtung 26 geleitet wird.

Die Verbrauchseinrichtung 26 befindet sich üblicherweise außerhalb des Gehäuses 20 und kann etwa ein Motor für eine Winde, ein Drehantrieb oder ein Stellzylinder sein. Üblicherweise sind bei einer Baumaschine 1 eine Vielzahl von Verbrauchseinrichtungen 26 angeordnet, welche über einen oder mehrere Energiewandler 16 mit entsprechender Energie versorgt werden.

Der als Elektromotor ausgebildete Hauptantrieb 12 ist in einem normalen Betrieb über eine nicht dargestellte Energieleitung mit einer externen Stromversorgung verbunden. In bestimmten Fällen, etwa beim Verfahren der Baumaschine 1 oder bei Rüstarbeiten, kann eine längere Unterbrechung der Stromversorgung auftreten. Für einen solchen Fall ist bei der Baumaschine 1 gemäß Fig. 1 nach der Erfindung eine Hilfsantriebseinheit 30 außerhalb des Gehäuses 20 vorgesehen. Die Hilfsantriebseinheit 30 weist dabei einen Hilfsantrieb 32 auf, welcher vorzugsweise ein Verbrennungsmotor, insbesondere ein Dieselmotor sein kann. Dieser Hilfsantrieb 32 kann über eine Wellenverbindung einen Hilfsenergiewandler 34 antreiben, welcher entsprechend dem Energiewandler 16 der Hauptantriebseinheit 10 ausgebildet sein kann. Insbesondere kann der Hilfsenergiewandler 34 der Hilfsantriebseinheit 30 eine Hydraulikpumpe oder ein Stromgenerator sein. Über eine Energieleitung, also eine Hydraulikleitung beziehungsweise eine Stromleitung, kann die vom Hilfsantrieb 32 erzeugte und durch den Hilfsenergiewandler 34 gewandelte Energie über eine Steckverbindung 24 an eine Verbindungsplatte 22, auch Schottplatte genannt, am Gehäuse 20 des Oberwagens der Baumaschine 1 zu der Hauptantriebseinheit 10 in dem Gehäuse 20 übertragen werden.

Gemäß der Erfindung ist dabei in dem Gehäuse 20 ein Sekundärantrieb 40 angeordnet, welcher über die Energieleitung 28 Energie von der Hilfsantriebseinheit 30 erhält. Der Sekundärantrieb 40 kann insbesondere ein Hydraulikmotor oder ein Elektromotor sein. Über eine Wellenverbindung, welche insbesondere mit einer Kupplung 42 versehen ist, kann so der Sekundärantrieb 40 bei einem Ausfall des Hauptantriebs 12 oder zu dessen Unterstützung das Verteilergetriebe 14 antreiben. Auf diese Weise können selbst bei einem Ausfall des Hauptantriebes 12 noch bestimmte Verbrauchseinrichtungen 26 der Baumaschine 1 betrieben werden, indem das Verteilergetriebe 14 weiterhin bestimmte Energiewandler 16 für die jeweiligen Verbrauchseinrichtungen 26 antreibt. Die Verbrauchseinrichtungen 26 sind dabei ebenfalls über Energieleitungen 28 mit den entsprechenden Energiewandlern 16 der Hauptantriebseinheit 10 verbunden. Die Energieleitungen 28 können dabei vorzugsweise ebenfalls über die Verbindungsplatte 22 mit entsprechenden lösbaren Steckverbindungen 24 verlaufen.

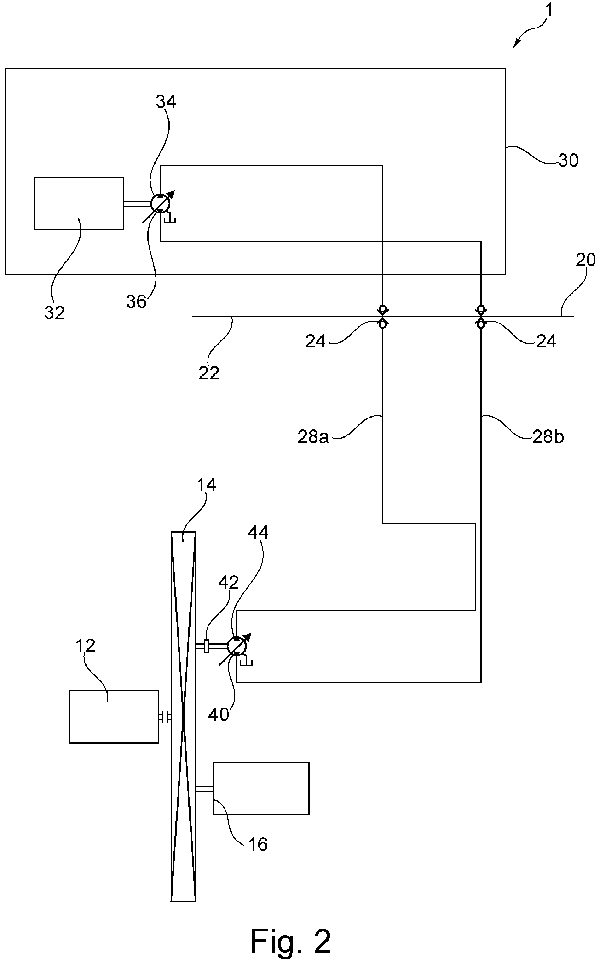

Bei der Ausführungsvariante gemäß Fig. 2, welche grundsätzlich wie der Grundaufbau gemäß Fig. 1 ausgebildet ist, ist bei der Hilfsantriebseinheit 30 der Hilfsenergiewandler 34 als eine Hydraulikpumpe 36 ausgebildet. Die Hydraulikpumpe 36 der Hilfsantriebseinheit 30 ist dabei in einem geschlossenen Hydraulikkreislauf mit entsprechenden Zuführ-Energieleitungen 28a und Rückführ-Energieleitungen 28b mit dem Sekundärantrieb 40 in dem Gehäuse 20 der Baumaschine 1 verbunden. Der Sekundärantrieb 40 ist dabei als ein Hydraulikmotor 44 ausgebildet, welcher also mit der Hydraulikpumpe 36 der Hilfsantriebseinheit 30 eine hydraulische Antriebsanordnung bildet. Der Hydraulikmotor 44 treibt über eine entsprechende Wellenverbindung mit Kupplung 42 im Bedarfsfall das Verteilergetriebe 14 zum Ersatz oder zur Unterstützung des Hauptantriebs 12 an.

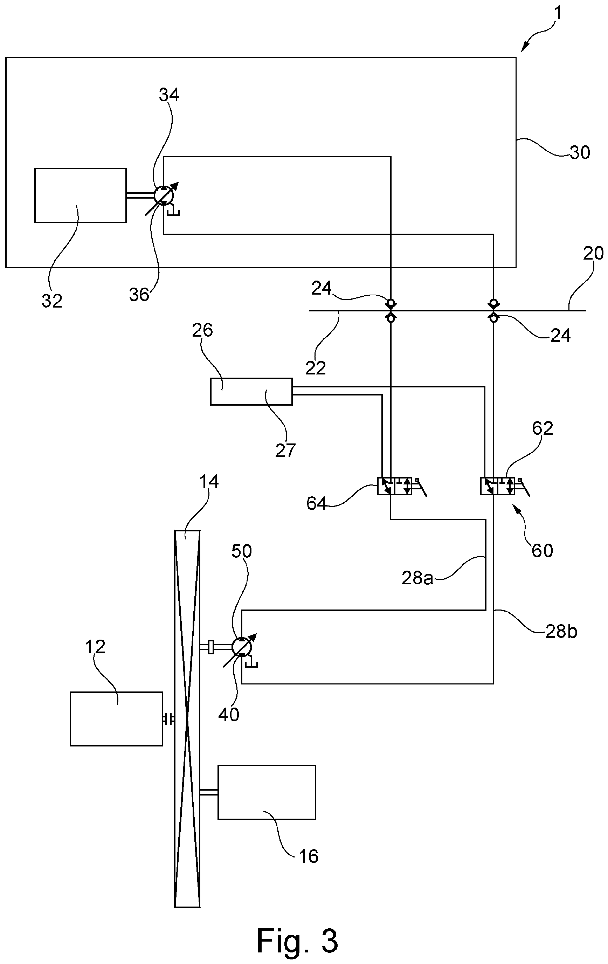

Die Antriebsanordnung gemäß Fig. 3 stellt eine Abwandlung der Antriebsanordnungen von den Figuren 1 und 2 dar. Entsprechend der Anordnung von Fig. 2 ist der Hilfsenergiewandler 34 der Hilfsantriebseinheit 30 ebenfalls als eine Hydraulikpumpe 36 ausgebildet. Im Unterschied zur Ausführungsvariante gemäß Fig. 2 ist der Sekundärantrieb 40 in dem Gehäuse 20 als eine durchschwenkbare Hydraulikeinheit 50 ausgebildet. Die durchschwenkbare Hydraulikeinheit 50 kann dabei zwei Betriebszustände einnehmen.

Bei einem Normalbetrieb, bei welchem das Verteilergetriebe 14 hinreichend durch den Hauptelektromotor des Hauptantriebs 12 angetrieben ist, ist die durchschwenkbare Hydraulikeinheit 50 als eine Hydraulikpumpe geschaltet und hat somit eine Funktion wie die anderen Energiewandler 16.

Bei der dargestellten Ausführungsvariante gemäß Fig. 3 ist in diesem Normalbetrieb über eine Stelleinrichtung 60 mit einem ersten Stellventil 62 und einem zweiten Stellventil 64 die als Hydraulikpumpe geschaltete Hydraulikeinheit 50 in einem geschlossenen Hydraulikkreislauf über die Energieleitungen 28a und 28b mit einer Verbrauchseinrichtung 26 verbunden, welche im vorliegenden Fall ein hydraulischer Windenmotor 27 sein kann.

Ist die Energieversorgung des Hauptelektromotors des Hauptantriebs 12 unterbrochen oder eingeschränkt, kann die durchschwenkbare Hydraulikeinheit 50 zu einem Hydraulikmotor als Sekundärantrieb 40 umgeschaltet werden. Hierzu wird über die Stelleinrichtung 60 mit den Stellventilen 62, 64 die Hydraulikeinheit 50 mit der Hydraulikpumpe 34 der Hilfsantriebseinheit 30 über die Steckverbindungen 24 in der Verbindungsplatte 22 verbunden. Nunmehr treibt die Hilfsantriebseinrichtung 30 mit der vom Hilfsantrieb 32 angetriebenen Hydraulikpumpe 36 die Hydraulikeinheit 50 als Hydraulikmotor in einem Hilfsbetrieb an. Über eine Wellenverbindung kann nunmehr in umgekehrter Richtung ein Drehmoment von der durchschwenkbaren Hydraulikeinheit 50 auf das Verteilergetriebe 14 übertragen werden. Auf diese Weise kann das Verteilergetriebe 14 bei einer Störung oder einem Ausfall des Hauptantriebes 12 weiter Energiewandler 16 und daran angeschlossene Verbrauchseinrichtungen 26 antreiben.

Die Hilfsantriebseinheit 30 kann vorzugsweise über eine entsprechende Halterung lösbar am Oberwagen der Baumaschine 1 mit dem Gehäuse 20 angebracht sein.

## Patentansprüche

1. Baumaschine mit
einem als Fahrwerk ausgebildeten Unterwagen,
- einem auf dem Unterwagen angeordneten Oberwagen,
- einer Hauptantriebseinheit (10) mit
- einem Hauptantrieb (12),
-- einem vom Hauptantrieb (12) angetriebenen Verteilergetriebe (14) und
-- mindestens einem Energiewandler (16), welcher eine mechanische Energie des Verteilergetriebes (14) in eine andere Energieform umwandelt,
-- wobei der Hauptantrieb (12), das Verteilergetriebe (14) und der Energiewandler (16) von einem Gehäuse (20) des Oberwagens umgeben und eingehaust sind, und
- mindestens einer Verbrauchseinrichtung (26), welche außerhalb des Gehäuses (20) angeordnet ist und mit der gewandelten Energie von zumindest einem der Energiewandler (16) versorgt wird,
**dadurch gekennzeichnet,**
- **dass** der Hauptantrieb (12) ein Hauptelektromotor ist und als Hauptenergieversorgung ein Stromleitungsanschluss vorgesehen ist, mit welchem der Hauptelektromotor mit einer externen Stromquelle mit Stromenergie versorgbar ist, und
- **dass** außerhalb des Gehäuses (20) zur Energieerzeugung und zur Energieübertragung in das Gehäuse (20) mindestens eine Hilfsantriebseinheit (30) angeordnet ist, durch welche zum Ersatz oder zum Unterstützen des Hauptelektromotors zusätzlich das Verteilergetriebe (14) antreibbar ist.

2. Baumaschine nach Anspruch 1,
**dadurch gekennzeichnet,**
**dass** die andere Energieform, in welcher die mechanische Energie des Verteilergetriebes (14) durch den mindestens einen Energiewandler (16) umgewandelt wird, hydraulische Energie, pneumatische Energie und/oder elektrischen Strom umfasst.

3. Baumaschine nach Anspruch 1 oder 2,
**dadurch gekennzeichnet,**
**dass** die mindestens eine Hilfsantriebseinheit (30) einen Hilfsantrieb (32), insbesondere einen Verbrennungsmotor und/oder einen Hilfselektromotor, umfasst.

4. Baumaschine nach Anspruch 3,
dadurch **gekenn zeichnet,**
dass der Hilfsantrieb (32) als Hilfselektromotor ausgebildet ist, welcher mit einer geringeren Spannung und/oder einem geringeren Strom als der Hauptelektromotor betreibbar ist.

5. Baumaschine nach einem der Ansprüche 1 bis 4,
**dadurch gekennzeichnet,**
**dass** der Energiewandler (16) als Hydraulikpumpe, Luftkompressor oder Stromgenerator ausgebildet ist.

6. Baumaschine nach einem der Ansprüche 1 bis 5,
**dadurch gekennzeichnet,**
**dass** die Verbrauchseinrichtung (26) als Hydraulikmotor, Hydraulikzylinder, Druckluftmotor, Pneumatikzylinder oder Elektromotor ausgebildet ist.

7. Baumaschine nach einem der Ansprüche 1 bis 6,
**dadurch gekennzeichnet,**
**dass** das Gehäuse (20) eine Verbindungsplatte (22) mit mehreren Steckverbindern aufweist, an welchen lösbar korrespondierende Stecker von Energieleitungen (28) ansteckbar sind, welche zu der mindestens einen Verbrauchseinrichtung (26) führen.

8. Baumaschine nach Anspruch 7,
**dadurch gekennzeichnet,**
**dass** die Energie von der Hilfsantriebseinheit (30) über eine Steckverbindung (24) in der Verbindungsplatte (22) übertragbar ist.

9. Baumaschine nach einem der Ansprüche 1 bis 8,
**dadurch gekennzeichnet,**
**dass** die Hilfsantriebseinheit (30) einen Hilfsenergiewandler (34), insbesondere eine Hydraulikpumpe oder einen Stromgenerator, außerhalb des Gehäuses (20) des Oberwagens aufweist und
**dass** die vom Hilfsenergiewandler (34) gewandelte Energie zu einem Sekundärantrieb (40) innerhalb des Gehäuses (20) übertragen wird, wobei der Sekundärantrieb (40) das Verteilergetriebe antreibt.

10. Baumaschine nach Anspruch 9,
**dadurch gekennzeichnet,**
**dass** der Sekundärantrieb (40) ein Hydraulikmotor (44) beziehungsweise ein Elektromotor ist.

11. Baumaschine nach einem der Ansprüche 1 bis 10,
**dadurch gekennzeichnet,**
- **dass** im Gehäuse (20) mindestens eine primäre Hydraulikpumpe angeordnet ist, welche mindestens eine Verbrauchseinrichtung (16) antreibt und als eine durchschwenkbare Hydraulikeinheit (50) ausgebildet ist, welche zu einem Hydraulikmotor umstellbar ist,
- **dass** die Hilfsantriebseinheit (30) eine sekundäre Hydraulikpumpe (36) außerhalb des Gehäuses (20) aufweist und
- **dass** eine Stelleinrichtung (60) vorgesehen ist, welche die primäre Hydraulikpumpe in dem Gehäuse (20) in einen Hydraulikmotor umstellt, welcher von der sekundären Hydraulikpumpe (36) außerhalb des Gehäuses (20) angetrieben wird und das Verteilergetriebe (14) als Sekundärantrieb (40) antreibt.

12. Baumaschine nach einem der Ansprüche 1 bis 11,
**dadurch gekennzeichnet,**
**dass** die Hilfsantriebseinheit (30) außerhalb des Gehäuses (20) an dem Oberwagen lösbar angebracht ist.

13. Baumaschine nach einem der Ansprüche 1 bis 12,
**dadurch gekennzeichnet,**
**dass** die Baumaschine (1) als eine Erdbearbeitungsmaschine ausgebildet ist.

14. Baumaschine nach Anspruch 13,
**dadurch gekennzeichnet,**
**dass** die Erdbearbeitungsmaschine als ein Bohrgerät, eine Schlitzwandgerät, ein Rüttler oder eine Ramme ausgebildet ist.

## Claims

1. Construction machine, comprising
an undercarriage in the form of a chassis,
- an upper carriage arranged on the undercarriage,
- a main drive unit (10) comprising
-- a main drive (12),
-- a transfer case (14) driven by the main drive (12), and
-- at least one energy converter (16), which converts mechanical energy of the transfer case (14) into a different energy form,
-- wherein the main drive (12), the transfer case (14) and the energy converter (16) are enclosed and housed by a housing (20) of the upper carriage, and
- at least one consumption device (26), which is arranged outside the housing (20) and is supplied with the converted energy from at least one of the energy converters (16),
**characterised in that**
- the main drive (12) is a main electric motor and, as a main energy supply, a power line connection is provided, with which the main electric motor can be supplied with electricity with an external power source, and
- outside the housing (20), for energy generation and for energy transfer into the housing (20), at least one auxiliary drive unit (30) is arranged, by which the transfer case (14) can additionally be driven in place of or in support of the main electric motor.

2. Construction machine according to claim 1,
**characterised in that**
the other energy form into which the mechanical energy of the transfer case (14) is converted by the at least one energy converter (16) includes hydraulic energy, pneumatic energy and/or electric current.

3. Construction machine according to claim 1 or 2,
**characterised in that**
the at least one auxiliary drive unit (30) comprises an auxiliary drive (32), in particular an internal combustion engine and/or an auxiliary electric motor.

4. Construction machine according to claim 3,
**characterised in that**
the auxiliary drive (32) is in the form of an auxiliary electric motor, which is operable with a lower voltage and/or a lower current than the main electric motor.

5. Construction machine according to one of claims 1 to 4,
**characterised in that**
the energy converter (16) is in the form of a hydraulic pump, air compressor or electricity generator.

6. Construction machine according to one of claims 1 to 5,
**characterised in that**
the consumption device (26) is in the form of a hydraulic motor, hydraulic cylinder, compressed air motor, pneumatic cylinder or electric motor.

7. Construction machine according to one of claims 1 to 6,
**characterised in that**
the housing (20) comprises a connection plate (22) having a plurality of plug-in connectors, into which corresponding plugs of power cables (28) leading to the at least one consumption device (26) can be detachably plugged.

8. Construction machine according to claim 7,
**characterised in that**
the energy from the auxiliary drive unit (30) is transferable via a plug-in connection (24) in the connection plate (22).

9. Construction machine according to one of claims 1 to 8, **characterised in that**
the auxiliary drive unit (30) includes an auxiliary energy converter (34), in particular a hydraulic pump or an electricity generator, outside the housing (20) of the upper carriage, and
the energy converted by the auxiliary energy converter (34) is transferred to a secondary drive (40) inside the housing (20), wherein the secondary drive (40) drives the transfer case.

10. Construction machine according to claim 9,
**characterised in that**
the secondary drive (40) is a hydraulic motor (44) or an electric motor.

11. Construction machine according to one of claims 1 to 10,
**characterised in that**
- in the housing (20), at least one primary hydraulic pump is arranged, which drives at least one consumption device (16) and is in the form of a swivelling hydraulic unit (50), which can be converted to a hydraulic motor,
- the auxiliary drive unit (30) includes a secondary hydraulic pump (36) outside the housing (20), and
- a setting device (60) is provided, which converts the primary hydraulic pump in the housing (20) into a hydraulic motor, which is driven by the secondary hydraulic pump (36) outside the housing (20) and drives the transfer case (14) as a secondary drive (40).

12. Construction machine according to one of claims 1 to 11,
**characterised in that**
the auxiliary drive unit (30) is detachably mounted to the upper carriage outside the housing (20).

13. Construction machine according to one of claims 1 to 12,
**characterised in that**
the construction machine (1) is in the form of an earth-working machine.

14. Construction machine according to claim 13,
**characterised in that**
the earth-working machine is in the form of a drill, a diaphragm wall machine, a vibrator or a ram.

## Revendications

1. Engin de chantier avec
un châssis réalisé comme train de roulement,
- un châssis tournant agencé sur le châssis,
- une unité d'entraînement principal (10) avec
- un entraînement principal (12),
-- une boîte de transfert (14) entraînée par l'entraînement principal (12) et
-- au moins un convertisseur d'énergie (16) qui convertit une énergie mécanique de la boîte de transfert (14) en une autre forme d'énergie,
-- dans lequel l'entraînement principal (12), la boîte de transfert (14) et le convertisseur d'énergie (16) sont entourés et logés par un boîtier (20) du châssis tournant, et
- au moins un dispositif de consommation (26) qui est agencé en dehors du boîtier (20) et est alimenté en l'énergie convertie par au moins un des convertisseurs d'énergie (16),
**caractérisé en ce que**
- l'entraînement principal (12) est un moteur électrique principal et un raccord de conduction de courant est prévu comme alimentation en énergie principale, avec lequel le moteur électrique principal peut être alimenté avec une source de courant externe en énergie électrique, et
- au moins une unité d'entraînement auxiliaire (30) est agencée en dehors du boîtier (20) pour la génération d'énergie et pour la transmission d'énergie dans le boîtier (20), par laquelle la boîte de transfert (14) peut en outre être entraînée pour le remplacement ou pour l'appui au moteur électrique principal.

2. Engin de chantier selon la revendication 1,
**caractérisé en ce que**
l'autre forme d'énergie, en laquelle l'énergie mécanique de la boîte de transfert (14) est convertie par l'au moins un convertisseur d'énergie (16), comporte de l'énergie hydraulique, de l'énergie pneumatique et/ou du courant électrique.

3. Engin de chantier selon la revendication 1 ou 2,
**caractérisé en ce que**
l'au moins une unité d'entraînement auxiliaire (30) comporte un entraînement auxiliaire (32), en particulier un moteur à combustion interne et/ou un moteur électrique auxiliaire.

4. Engin de chantier selon la revendication 3,
**caractérisé en ce que**
l'entraînement auxiliaire (32) est réalisé comme moteur électrique auxiliaire qui peut fonctionner avec une tension plus faible et/ou un courant plus faible comme le moteur électrique principal.

5. Engin de chantier selon l'une quelconque des revendications 1 à 4,
**caractérisé en ce que**
le convertisseur d'énergie (16) est réalisé comme pompe hydraulique, compresseur d'air ou générateur de courant.

6. Engin de chantier selon l'une quelconque des revendications 1 à 5,
**caractérisé en ce que**
le dispositif de consommation (26) est réalisé comme moteur hydraulique, vérin hydraulique, moteur à air comprimé, vérin pneumatique ou moteur électrique.

7. Engin de chantier selon l'une quelconque des revendications 1 à 6,
**caractérisé en ce que**
le boîtier (20) présente une plaque de liaison (22) avec plusieurs connecteurs enfichables, sur lesquels peuvent être enfichées des fiches de conduites d'énergie (28) correspondantes de manière amovible, lesquelles mènent à l'au moins un dispositif de consommation (26).

8. Engin de chantier selon la revendication 7,
**caractérisé en ce que**
l'énergie peut être transmise de l'unité d'entraînement auxiliaire (30) par le biais d'une liaison enfichable (24) dans la plaque de liaison (22).

9. Engin de chantier selon l'une quelconque des revendications 1 à 8,
**caractérisé en ce que**
l'unité d'entraînement auxiliaire (30) présente un convertisseur d'énergie auxiliaire (34), en particulier une pompe hydraulique ou un générateur de courant, en dehors du boîtier (20) du châssis tournant et
l'énergie convertie par le convertisseur d'énergie auxiliaire (34) est transmise à un entraînement secondaire (40) à l'intérieur du boîtier (20), dans lequel l'entraînement secondaire (40) entraîne la boîte de transfert.

10. Engin de chantier selon la revendication 9,
**caractérisé en ce que**
l'entraînement secondaire (40) est un moteur hydraulique (44) ou un moteur électrique.

11. Engin de chantier selon l'une quelconque des revendications 1 à 10,
**caractérisé en ce que**
- au moins une pompe hydraulique primaire est agencée dans le boîtier (20), laquelle entraîne au moins un dispositif de consommation (16) et est réalisée comme une unité hydraulique (50) pivotante pouvant être transformée en moteur hydraulique,
- l'unité d'entraînement auxiliaire (30) présente une pompe hydraulique secondaire (36) en dehors du boîtier (20) et
- un dispositif de réglage (60) est prévu, lequel déplace la pompe hydraulique primaire dans le boîtier (20) dans un moteur hydraulique qui est entraîné par la pompe hydraulique (36) secondaire en dehors du boîtier (20) et entraîne la boîte de transfert (14) comme entraînement secondaire (40).

12. Engin de chantier selon l'une quelconque des revendications 1 à 11,
**caractérisé en ce que**
l'unité d'entraînement auxiliaire (30) est montée de manière amovible en dehors du boîtier (20) au niveau du châssis tournant.

13. Engin de chantier selon l'une quelconque des revendications 1 à 12,
**caractérisé en ce que**
l'engin de chantier (1) est réalisé comme une machine de traitement du sol.

14. Engin de chantier selon la revendication 13,
**caractérisé en ce que**
la machine de traitement du sol est réalisée comme un appareil de forage, un appareil à paroi moulée, un vibreur ou un engin de fonçage.
